**Europäisches Patentamt**

**European Patent Office**

**Office européen des brevets**

(19)

(11) Publication number: **0 231 613**
A2

(12) # EUROPEAN PATENT APPLICATION

(21) Application number: **86309419.9**

(22) Date of filing: **03.12.86**

(51) Int. Cl.³: **H 04 N 1/40**

(30) Priority: **20.12.85 US 811573**

(43) Date of publication of application:
**12.08.87 Bulletin 87/33**

(84) Designated Contracting States:
**DE FR GB**

(71) Applicant: **TEKTRONIX, INC.**
**Tektronix Industrial Park D/S Y3-121 4900 S.W. Griffith Drive P.O. Box 500**
**Beaverton Oregon 97077(US)**

(72) Inventor: **Peekema, Thomas E.**
**15185 S.W. Jaylee Street**
**Beaverton Oregon 97007(US)**

(72) Inventor: **Liepe, Steven F.**
**21504 S.W. 92nd**
**Tualatin Oregon 97062(US)**

(74) Representative: **Burke, Steven David et al,**
**R.G.C. Jenkins & Co. 12-15, Fetter Lane**
**London EC4A 1PL(GB)**

(54) **Method and device for generating a binary signal.**

(57) A binary signal for driving a single color, bi-level print device, such as an ink jet head, in order to produce a picture having multiple levels of saturation of the single color in response to an analog picture signal of which the magnitude varies in dependence upon the desired level of saturation over the picture along a predetermined scanning path, is generated by resolving the picture into a plurality of dither cells and resolving each dither cell into an identical array of separately addressable picture elements having predetermined respective positions in the dither cell. A reference value is assigned to the position of each picture element in each dither cell, the reference value for a given position in a given cell being the same as that for the same position in each other cell. The reference values are used to generate a reference signal that is synchronous with the analog picture signal, and the analog picture signal is compared with the reference signal. The value of the binary signal depends on the result of the comparison of the analog picture and the reference signal.

EP 0 231 613 A2

./...

Croydon Printing Company Ltd.

FIG. 3

# METHOD AND DEVICE FOR GENERATING A BINARY SIGNAL

This invention relates to a method and device for generating a binary signal.

## Background of the Invention

A conventional ink jet print engine includes several ink jet heads for applying color media of different respective colors to a record medium. Each ink jet head is a bi-level device, in that it is either on (the elementary area of the record medium that is presented to the head receives a drop of color medium from the head) or off (the elementary area does not receive a drop of color medium). In a particular example, the engine has four heads for applying color media of the subtractive primaries (yellow, cyan and magenta) and black. Red, green and blue are formed by superimposing two drops of color medium on the same elementary area: cyan over yellow provides green, magenta over yellow provides red, and magenta over cyan provides blue. In this manner, the four colors can provide seven solid colors, with the white of the paper supplying an eighth. The size of the area covered by a drop of color medium is very small, on the order of 7 mils in diameter (1 mil is 0.001 inch, or about 0.025 mm).

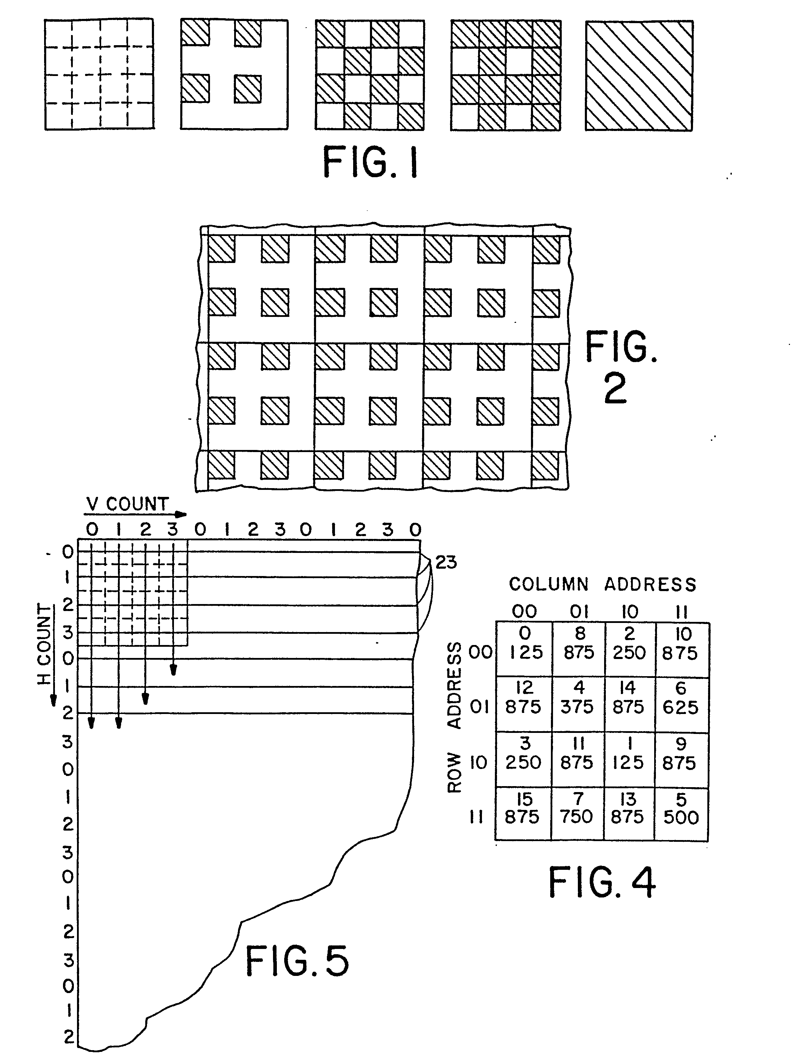

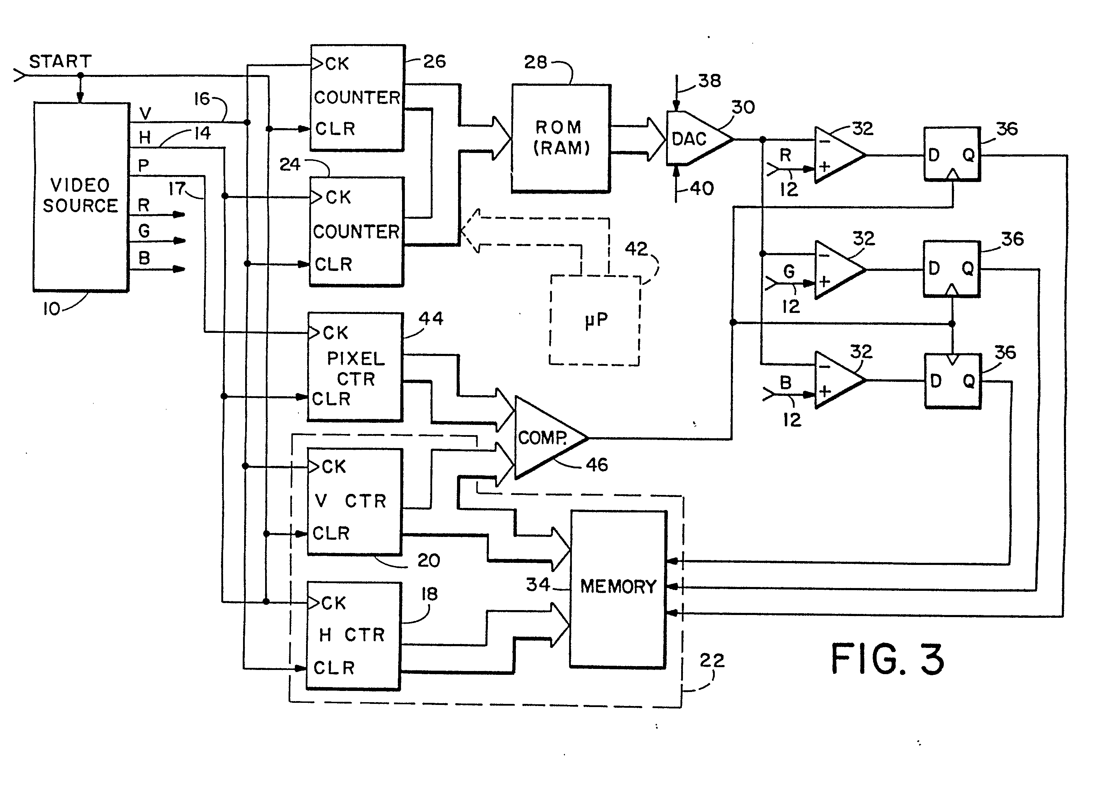

In order to drive an ink jet printer to generate a reproduction of a picture represented by an analog video signal in color component (RGB) form, the video signal must be presented to the printer in digital form. Typically, three digital words, representing the magnitudes of the three color components respectively, are presented. The analog video signal is normally converted to digital form by use of one flash-type analog-to-digital converter (ADC) for each of the color components. If the video signal is digitized to two bits per primary, the digital signal that is presented to the printer has six bits. Therefore, a six-bit parallel data path is required. Such a system is capable of rendering four shades for each of the three color components, or $4^3$ (64) total colors. If this data is stored in a frame buffer so as to facilitate its being reformatted in a time sequence appropriate for a particular print engine, the frame buffer must have six memory planes. In addition, since the ink jet print engine is a binary engine, the data must be processed in such a manner as to simulate four shades per primary when the engine is in fact capable of only printing or not printing a dot of ink. This processing is known as dithering. Dithering is a process of simulating color shades by varying the density with which dots of color medium are applied over a specific area of a record medium, each dot of a given color medium being of essentially the same size and density. If each primary is to have four levels, then four levels of dot density must be provided. When dither patterns of different primaries are superposed, mixtures of colors are formed. It is therefore possible to use the limited number of colors that can be provided directly by the ink jet print engine to generate a visual impression of additional colors, by providing pixels of one color mixed with pixels of another color. For example, if an area of the record medium is composed of a square array of 16 separately printable pixels, the area will appear yellow if all pixels are printed with yellow dots and will appear red if all pixels are printed with red dots, but will appear a shade of orange if some pixels are printed with yellow dots and some with red dots. For example, as shown in FIG. 1, in which white represents yellow and diagonal hatching represents red, by adjusting the ratio of yellow dots to red dots the shade can be varied from yellow-orange (ratio of three to one), through orange (one to one) to red-orange (one to three). The area over which the ink dot density is controlled is referred to hereinafter as a dither cell.

In the case of the mixed colors, the distribution within a dither cell of the pixels occupied by a given color is arranged in systematic fashion, so that when several dither cells as shown in Fig. 1 are arranged to form a colored area, the distribution of dots over that area is uniform as shown in Fig. 2, and therefore the area provides a uniform visual impression.

In accordance with one approach, the color information represented by the digital signal is analyzed on a cell-by-cell basis. A digital controller determines what color is assigned to a particular cell, and consults a look-up table in order to determine what dither pattern produces this color. The controller thus causes the data path from the frame buffer to be reduced to a single bit per primary, which is the form required by the ink jet print engine.

## Summary of the Invention

In a preferred embodiment of the invention, a binary signal for driving a single color, bi-level print device, such as an ink jet head, in order to produce a picture having multiple levels of saturation of the single color in response to an analog picture signal of which the magnitude varies in dependence upon the desired level of saturation over the picture along a predetermined scanning path, is generated by resolving the picture into a plurality of dither cells and resolving each dither cell into an identical array of separately addressable picture elements having predetermined respective positions in the dither cell. A reference value is assigned to the position of each picture element in each dither cell, the reference value for a given position in a given cell being the same as that for the same position in each other cell. The reference values are used to generate a reference signal that is synchronous with the analog picture signal, and the analog picture signal is compared with the reference signal. The value of the binary signal depends on the result of the comparison of the analog picture and the reference signal.

## Brief Description of the Drawings

For a better understanding of the invention, and to show how the same may be carried in effect, reference will now be made, by way of example, to the accompanying drawings in which:

FIG. 1 shows the nature of dither patterns,

FIG. 2 illustrates how several dither cells provide a uniform color impression,

FIG. 3 is a block diagram of system for generating binary signals from analog color component video signals and writing those binary signals into a frame buffer,

FIG. 4 shows how different pixels of a dither cell are allocated to different saturation levels, and

FIG. 5 shows how a record medium is resolved into dither cells and pixels by use of the FIG. 3 system.

## Detailed Description

The system shown in FIG. 3 comprises a sampler and binarizer that is used to generate eight different dither patterns for each of the colors (cyan, yellow, magenta and black) that can be provided by a four-color ink jet print engine. The different dither patterns allow different levels of saturation to be achieved for each color relative to each other color. The levels of saturation for each color may be designated from level zero, in which no pixels are printed with that color, to level seven, in which all pixels are printed with that color. Table I, taken in conjunction with FIG. 4, indicates the different levels of saturation. In level six, eight of the 16 pixels are printed. It may, in some applications, be desired that the different levels be distributed more uniformly over the range of numbers of pixels that can be printed.

Table I

| Saturation level | Pixels that are printed |
|---|---|
| 0 | None |
| 1 | Pixels 0 and 1 |
| 2 | Pixels 0 - 3 |
| 3 | Pixels 0 - 4 |
| 4 | Pixels 0 - 5 |
| 5 | Pixels 0 - 6 |
| 6 | Pixels 0 - 7 |
| 7 | All |

The dither patterns are generated in response to a repetitive color component analog video signal R,G,B that is generated by a video signal source 10 and is applied to the sampler and binarizer by way of input terminals 12. The video signal is synchronized with horizontal and vertical sync signals that are received by the sampler and binarizer on lines 14 and 16 and are also applied to row (horizontal) and column (vertical) address counters 18 and 20 of a frame buffer 22. A pixel clock signal is provided on line 17 by the video signal source, or is generated from the horizontal sync signal using standard techniques. The video signal represents the distribution of color over a raster composed of an array of horizontal scan lines 23 (FIG. 5). The horizontal sync signal is a pulse train that repeats at line rate, whereas the vertical sync signal is a pulse train that repeats at frame rate. The pixel clock signal repeats at about one thousand times line rate and serves to establish sampling points for conversion of the analog video signal into binary form. Each of the color component signals is converted to binary form and the binary signals are written into the frame buffer. The binary signals are ultimately read out of the frame buffer under control of sync signals and a clock signal that are also used to control the scanning of a record medium by an ink jet print engine (not shown).

The sampler and binarizer comprises two two-bit counters 24 and 26. The counter 24 receives the horizontal sync signal at its clock input and the vertical sync signal at its clear input, whereas the counter 26 receives the vertical sync signal at its clock input and a start signal at its clear input. The start signal clears the counter 26 to provide an output word 00. On receipt of the first vertical sync pulse, indicating the start of the first repetition of the video signal, the output word of the counter 26 advances to 01 and the counter 24 is cleared. On successive horizontal sync pulses the output of the counter 24 steps through the sequence 00, 01, 10, 11 etc. until the next vertical sync pulse, at which the counter 24 is again cleared. The outputs of the two counters are merged and are applied as an address signal to a ROM (read-only memory) look-up table 28. The output of the counter 26 provides the higher order bits of the address signal. The output of the look-up table is applied to a digital-to-analog converter (DAC) 30. The output terminal of the DAC 30 is applied to the reference inputs of three comparators 32, the signal inputs of which are connected respectively to the three terminals 12.

If the voltage applied to the signal input of one of the comparators 32 exceeds the voltage applied to the reference input, the comparator provides a logical 1 at its output terminal; otherwise, the comparator output is a logical 0. The output signals of the comparators are applied to latches 36, and are latched in response to a sample strobe signal that occurs once for each occurrence of the horizontal sync signal. The signals that are latched into the latches 36 are written into the memory 34 of the frame buffer under control of column and row address signals generated by the counters 18 and 20 respectively.

The sample strobe signal is derived from the horizontal sync signal, the vertical sync signal and the pixel clock signal. The pixel clock signal is applied to a counter 44, which receives the horizontal sync signal at its clear input. The counter 20, which counts the vertical sync pulses, also receives the start scan signal at its clear input. The outputs of the two counters 20 and 44 are applied to a comparator 46 which provides a sample strobe pulse at its output terminal if the contents of the two counters are equal. Therefore, at the start of each line of the video signal the counter 44 is cleared to a zero output. The counter 44 counts the pixel clock pulses and when the contents of the two counters 20 and 44 are equal the comparator 46 provides a sample strobe pulse and the signals present at the outputs of the comparators 32 are latched. At the next vertical sync pulse, the counter 20 is incremented by one, and therefore one more pixel clock pulse has to be counted in order for a sample strobe pulse to be generated. Accordingly, the position along the video signal line 23 at which the signals provided by the comparators 32 are latched is stepped along the line by one pixel position on each occurrence of a vertical sync pulse. Therefore, the sample strobe signal serves to resolve the raster into vertical columns that are one pixel wide and occur at frame rate, and each vertical column is resolved into individual pixels by the horizontal sync signal. Because the counter 24 is reset by the vertical sync signal, the merged outputs of the two counters, taken in conjunction with the sample strobe signal, define a four-by-four cell of pixels and corresponding memory locations, as shown in FIG. 4. The four four-bit words defining the pixels in a given row of the cell repeat throughout the relevant line of the video signal, and repeat every four lines thereafter.

The look-up table 28 has an eight-bit output, providing 256 possible digital output words. Of these 256 possible output words, eight are selected, based on the nature of the video signal, to provide the desired eight saturation levels. Assuming that the three color components of the video signal are normalized to one volt peak-to-peak, then the eight possible output voltages of the DAC 30, corresponding to the eight possible digital input words, might be as indicated in Table II, which also shows the respective saturation levels.

### Table II

| Input word | Saturation level | Reference voltage (mV) |
|---|---|---|
| 00000000 | 0 | 0 |
| 00100000 | 1 | 125 |
| 01000000 | 2 | 250 |
| 01100000 | 3 | 375 |
| 10000000 | 4 | 500 |
| 10100000 | 5 | 625 |
| 11000000 | 6 | 750 |
| 11100000 | 7 | 875 |

The voltage levels and the corresponding pixel numbers are shown in FIG. 4.

If, while a column having an address for which the lowest order bits are 00, is being addressed under control of the counter 20, the voltage of one of the color component signals has a value that lies within the range from 500 mV to 625 mV, corresponding to saturation level 4, a logical 1 will be written into the corresponding plane of the memory 34 of each location having a row address of which the two lowest order bits are 00 and a logical 0 will be written into other locations. Similarly, if the two lowest order bits of the column address were 01, a logical 0 would be written into every location. On the other hand, if the voltage of the color component signal were in the range from 125 mV to 250 mV, a logical 1 would be written into only those locations for which the two lowest order bits of both the row address and the column address are 00 or 10. It will therefore be seen that as the scanning of the memory proceeds under control of the counters 18 and 20, the operation of the counters 24 and 26, the ROM 28, the DAC 30, the comparators 32 and the latches 36 results in dither patterns being defined. Eight dither patterns are defined without its being necessary to store eight (three bits) different levels per primary, and the patterns are used without its being necessary to convert each of the color component signals into a multiple bit digital signal.

The DAC 26 is a multiplying DAC which receives a variable reference voltage at its terminal 38 to provide for level scaling and receives an offset signal at its terminal 40 for zero level adjustment.

The look-up table 28 may be implemented as a random access memory having additional address lines connected to a microprocessor 42 so that the address lines from the counters 20 and 22 can be caused to access different tables. For example, if the level of the video signal changes abruptly, at at the edge of a shape, the microprocessor may cause the counters to access a different table for a few pixels before or after the change so as to emphasize the change. Likewise, if separate look-up tables and DACs were assigned to the three color component signals respectively, the tables may be modified to compensate for amplitude imbalances among the three signals. In some cases, phase errors between the component signals may be treated as amplitude errors. Further, the microprocessor may modify the output value of the look-up table so that it depends dynamically on picture content.

It will therefore be seen that the present invention makes it necessary to use only one comparator for each color component signal. Also, it is not necessary to use a frame buffer since the output signals provided by the latches 36 may be used directly to drive an ink jet print engine. If a frame buffer is used, it is only necessary to provide one plane of memory per primary since the signals provided by the binarizer are in binary form instead of multiple-bit digital forms.

It will be appreciated that the present invention is not restricted to the particular embodiment that has been described and illustrated, and that variations may be made therein without departing from the scope of the invention as defined in the appended claims and equivalents thereof. For example, the invention is not restricted to use with a video signal and a binary print engine, and may be used in other situations in which it is desired to use a binary record medium to create a record of an analog signal. The invention has particular application where resolution in one sense (spatial in the case of the described embodiment) can be sacrificed in favor of resolution in a second sense (color shades). Even so far as video signals are concerned, the invention is not restricted to use with a color component video signal, and is equally applicable to use with a monochrome video signal. Also, although the illustrated sampler and binarizer operates by sampling each line of the video signal once per repetition, in order to allow the use a relatively low speed memory for the frame buffer, if higher speed memory were employed multiple samples could be taken on each line. It will also be understood that items of a routine nature have not been described in detail, because they are not necessary to an understanding of the invention.

## Claims

1. A method of generating a binary signal in response to an analog input signal, whereby the binary signal may be used to create a record of variations in the magnitude of the analog signal in a record medium having a multiplicity of separately addressable bi-level record locations that correspond respectively to successive elementary intervals, said method comprising organizing the record locations of the record medium into a plurality of identical dither cells, allocating a reference value to the position of each record location in each dither cell, the reference value for a given position in a given dither cell being the same as that for the same position in each other cell, comparing the reference value for a given record location with the magnitude of the analog input signal for the corresponding elementary location along the scanning path, and generating a first binary signal value in the event that the reference value for said given record location bears a predetermined relationship to the magnitude of the analog input signal for said corresponding elementary location, and otherwise generating a second binary signal value.

2. A method according to claim 1, wherein the magnitude of the analog signal varies in accordance with the desired level of saturation of a selected color along a predetermined scanning path, and the elementary intervals correspond respectively to elementary locations along the scanning path.

3. A method according to claim 2, wherein the predetermined scanning path is a raster, and the record locations are organized into dither cells each including record locations corresponding to elementary locations on a plurality of adjacent scan lines of the raster.

4.  A method according to claim 1, wherein the record medium is a semiconductor memory device and the method also comprises writing the binary signal into the semiconductor memory device.

5.  A device for generating a binary signal in response to an analog signal, whereby the binary signal may be used to create a record of variations in the magnitude of the analog signal in a record medium having a multiplicity of bi-level record locations, said device comprising means for organizing the record locations of the record medium into a plurality of identical dither cells, means for allocating a reference value to the position of each record location in each dither cell, the reference value for a given position in a given dither cell being the same as that for the same position in each other cell, means for comparing the reference value for a given record location with the magnitude of the analog signal for the corresponding elementary location along the scanning path, and means for generating a first binary signal value in the event that the reference value for said given record location bears a predetermined relationship to the magnitude of the analog input signal for said corresponding elementary location and otherwise generating a second binary signal value.

6.  A device according to claim 5, wherein the means for organizing the record locations into dither cells comprise at least first and second counters for counting sync pulses of the analog signal.

7.  A device according to claim 6, wherein the means for allocating reference values comprise a look-up table for receiving the output signals of the counters and generating a digital reference signal having digital values that depend on the output signals of the counters, and a digital-to-analog converter for converting the digital reference signal to analog form.

0231613

FIG. 1

FIG. 2

V COUNT

H COUNT

23

FIG.5

COLUMN ADDRESS

| ROW ADDRESS | 00 | 01 | 10 | 11 |
|---|---|---|---|---|
| 00 | 0 125 | 8 875 | 2 250 | 10 875 |
| 01 | 12 875 | 4 375 | 14 875 | 6 625 |
| 10 | 3 250 | 11 875 | 1 125 | 9 875 |
| 11 | 15 875 | 7 750 | 13 875 | 5 500 |

FIG. 4

FIG. 3

2/2

0231613